(19) Europäisches Patentamt
European Patent Office
Office européen des brevets

(11) **EP 3 631 961 B1**

(12) **FASCICULE DE BREVET EUROPEEN**

(45) Date de publication et mention
de la délivrance du brevet:
**31.03.2021 Bulletin 2021/13**

(21) Numéro de dépôt: **18724901.6**

(22) Date de dépôt: **22.05.2018**

(51) Int Cl.:
*H02M 3/156* (2006.01)

(86) Numéro de dépôt international:
**PCT/EP2018/063401**

(87) Numéro de publication internationale:
**WO 2018/215477 (29.11.2018 Gazette 2018/48)**

(54) **PROCEDE DE COMMANDE D'UN CIRCUIT ELECTRONIQUE COMMUTE**

VERFAHREN ZUR STEUERUNG EINER GESCHALTETEN ELEKTRONISCHEN SCHALTUNG

METHOD FOR CONTROLLING A SWITCHED ELECTRONIC CIRCUIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.05.2017 FR 1754538**

(43) Date de publication de la demande:
**08.04.2020 Bulletin 2020/15**

(73) Titulaires:
• **Safran Electronics & Defense**
**75015 Paris (FR)**
• **Université de Lorraine**
**54000 Nancy (FR)**

(72) Inventeurs:
• **BENEUX, Gaetan**
**75015 Paris (FR)**
• **DAAFOUZ, Jamal**
**75015 Paris (FR)**
• **GRIMAUD, Louis**
**75015 Paris (FR)**
• **RIEDINGER, Pierre**
**75015 Paris (FR)**

(74) Mandataire: **Lavialle, Bruno François Stéphane et al**
**Cabinet Boettcher**
**16, rue Médéric**
**75017 Paris (FR)**

(56) Documents cités:
• **ABDELDJABAR BENRABAH ET AL: "Robust observer based active damping control for LCL filtered grid connected converters using LMI criterion", 2016 18TH EUROPEAN CONFERENCE ON POWER ELECTRONICS AND APPLICATIONS (EPE'16 ECCE EUROPE), JOINTLY OWNED BY IEEE-PELS AND EPE ASSOCIATION, 5 septembre 2016 (2016-09-05), pages 1-6, XP032985093, DOI: 10.1109/EPE.2016.7695376**
• **YFOULIS C ET AL: "Robust constrained stabilization of boost DC-DC converters through bifurcation anal", CONTROL ENGINEERING PRACTICE, PERGAMON PRESS, OXFORD, GB, vol. 35, 11 décembre 2014 (2014-12-11), pages 67-82, XP029134578, ISSN: 0967-0661, DOI: 10.1016/J.CONENGPRAC.2014.11.004**
• **E Maherzi ET AL: "Estimation of the State and the Unknown Inputs of a Multimodel with non Measurable Decision Variables", Journal of Applied Research and Technology, 1 juin 2014 (2014-06-01), pages 422-434, XP055443005, DOI: 10.1016/S1665-6423(14)71623-2 Extrait de l'Internet: URL:https://ac.els-cdn.com/S1665642314716232/1-s2.0-S1665642314716232-main.pdf?_tid= 3c786e20-ff6f-11e7-a3bd-00000aacb360&acdnat=1516624068_19c25c7e0d624ff022e7bfc0e8db1 c9a [extrait le 2018-01-18]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

DOMAINE TECHNIQUE DE L'INVENTION

La présente invention concerne le domaine de l'électronique et plus particulièrement la commande de circuit électronique commuté.

ARRIERE-PLAN TECHNOLOGIQUE

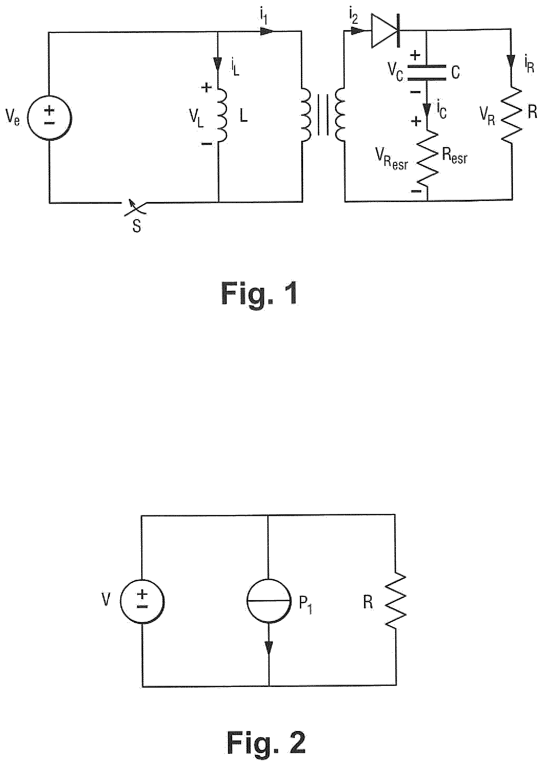

Parmi les circuits électroniques commutés figurent les convertisseurs de puissance. Ces dispositifs sont très largement utilisés dans les applications domestiques et industrielles pour adapter l'énergie fournie par une source d'alimentation à une charge. Un convertisseur continu-continu idéal de type FLYBACK est illustré sur la figure 1. Ce convertisseur comprend un circuit primaire et un circuit secondaire. Le circuit primaire comprend une source de tension reliée en série à l'enroulement primaire d'un transformateur et à un interrupteur S. Une inductance $L$ est ajoutée pour modéliser le transformateur. Le circuit secondaire comprend un enroulement secondaire du transformateur relié par une diode $D$ à une charge de résistance $R$. Un condensateur $C$ est monté en parallèle de l'enroulement secondaire et de la diode. Une résistance $R_{esr}$ est ajouté en série avec le condensateur $C$ pour modéliser une une perte dans le condensateur $C$. Le transistor peut être commandé, au contraire de la diode. La source de tension d'entrée $V_e$ est idéale, c'est-à-dire sans résistance série et avec une puissance illimitée. L'inductance du primaire $L$ est également idéale, c'est-à-dire sans résistance série ni perte magnétique. La diode et le transistor sont idéaux (la tension en mode de conduction est nulle). Le transformateur est également supposé idéal.

Le convertisseur peut fonctionner selon trois modes :

- Mode 1 : l'inductance $L$ accumule l'énergie de la source de tension $V_e$, tandis que le condensateur $C$ alimente la charge $R$.
- Mode 2 : l'énergie accumulée dans l'inductance $L$ s'écoule dans le transformateur, charge le condensateur $C$ et alimente la charge $R$.
- Mode 3 : le condensateur $C$ alimente la charge $R$.

Si seuls les Modes 1 et 2 sont actifs pendant le cycle, le convertisseur travaille en MCC (Mode de conduction continue). Si le Mode 3 est actif, le système travaille en MCD (Mode de conduction discontinue), à savoir que l'énergie stockée en Mode 1 dans l'inductance est entièrement transférée au condensateur, en Mode 2.

Il est connu de commander ces convertisseurs à partir d'une modélisation en système linéaire invariant en temps (LTI). Ces méthodes conduisent à une stabilité locale. Elles sont généralement mises en œuvre avec deux boucles, une boucle de courant rapide et une boucle de tension.

La miniaturisation des composants électroniques a permis de développer des systèmes moins coûteux. En outre, il est intéressant de travailler à basse intensité afin de réduire les pertes. Dans ce contexte, la fréquence de commutation du convertisseur joue un rôle fondamental : plus la fréquence de commutation peut être augmentée, et plus les pièces électroniques peuvent être miniaturisées et les pertes diminuées.

Cependant, cette miniaturisation pose des problèmes de robustesse : le faible temps de réponse induit par les composants plus petits rend le système plus sensible aux variations.

Il a été envisagé de tenir compte de la nature hybride explicite de ces convertisseurs dans la conception des lois de commande de stabilisation basées notamment sur une modélisation de systèmes affines commutés.

Un exemple de modélisation d'un système affine commuté applicable à un tel convertisseur continu-continu de type FLYBACK, et les conditions de fonctionnement correspondantes, sont décrits ci-après. On notera dans la suite : l'ensemble composé des $N$ premiers entiers est représenté par $K = \{1,...,N\}$ et si le simplexe de dimension N-1 est

$$\Lambda_N := \{ \lambda \in \mathbb{R}^N \mid \forall i \in \mathbb{K}, \lambda_i \geq 0, \sum_{i=1}^{N} \lambda_i = 1\}.$$

La combinaison convexe d'un ensemble de matrices $A = \{A_1,..., A_N\}$ est représentée $A(\lambda) = \sum_{i=1}^{N} \lambda_i A_i$, avec $\lambda \in \Lambda_N$. La matrice Identité est représentée par I pour toutes les dimensions.

Un tel convertisseur est un système commuté qui peut être modélisé sous forme d'espace d'état commuté comme suit :

$$\dot{x} = A_\sigma x + B_\sigma u \qquad (1)$$

où $x(t) \in \mathbb{R}^n$ est l'état et $u(t) \in \mathbb{R}^m$ est l'entrée considérée comme fixe $(u(t) = V_e)$, ladite entrée ne pouvant être utilisée comme variable de commande. La commande est formée par la règle de commutation $\sigma : \mathbb{R}^n \to K$ qui indique le mode actif à chaque instant. Le vecteur d'état $x^T = [i_L, v_C]$ se compose de $i_L$ (courant traversant l'inductance $L$) et de $v_c$ (tension aux bornes du condensateur C). En référence à la figure 1 et en utilisant les lois de Kirchhoff, les ensembles A = {A1,..., $A_N$} et $\beta$ = {B1,..., $B^{N}$}, avec $N$ = 3, sont donnés par :

$$A_1 = \begin{bmatrix} 0 & 0 \\ 0 & \frac{-1}{RCK} \end{bmatrix}, \qquad A_2 = \begin{bmatrix} \frac{n^2 R_{esr}}{LK} & \frac{nR_{esr}}{RLK} - \frac{n}{L} \\ \frac{-n}{CK} & \frac{-1}{RCK} \end{bmatrix}$$

$$A_3 = \begin{bmatrix} 0 & 0 \\ 0 & \frac{-1}{RCK} \end{bmatrix} \qquad (2)$$

$$B_1 = \begin{bmatrix} \frac{1}{L} \\ 0 \end{bmatrix} \quad B_2 = \begin{bmatrix} 0 \\ 0 \end{bmatrix} \quad B_3 = \begin{bmatrix} 0 \\ 0 \end{bmatrix} \qquad (3)$$

avec $K = \left(1 + \frac{Resr}{R}\right).$ Dans ce qui suit, on considère la configuration MCC (seuls les Modes 1 et 2 peuvent être activés, d'où N=2). Le problème de commande, qui est un problème de commande de système commuté, peut également être considéré en utilisant, pour le système défini en (1), une représentation "convexifiée" donnée par :

$$\dot{x} = A(\lambda)x + B(\lambda)u \qquad (4)$$

avec $\lambda \in \Lambda_N$. En effet, l'application du théorème de densité garantit que toutes les trajectoires du système convexifié défini en (4) peuvent être atteintes par le système commuté défini par l'équation (1) au moyen d'une commutation suffisamment rapide. Ceci signifie que l'on peut étudier le système convexifié et appliquer les résultats obtenus au système commuté. La matrice $A(\lambda)$ étant Hurwitz, il est possible de concevoir des stratégies de stabilisation, même si l'ensemble des $A_i$ n'est pas stable. Dans ce cas, le point d'équilibre du système défini par l'équation (4), représenté par $x_e$, se trouve dans l'ensemble $X_e$ tel que, pour $u$ fixe, est défini :

$$X_e = \{ x \in \mathbb{R}^N \mid x = -A^{-1}(\lambda)B(\lambda)u, \\ \lambda \in \Lambda, \ A(\lambda) \ \text{Hurwitz}\} \qquad (5)$$

Les stratégies de stabilisation de cette loi de commande sont fondées sur une connaissance supposée parfaite de tous les paramètres de fonctionnement du convertisseur, dont la tension d'entrée et la charge.

En prenant comme hypothèse que pour tout $\lambda \in \Lambda$, tel que A($\lambda$) est Hurwitz, il existe au moins un indice i, tel que $\lambda_i \neq 0$ et $A_i$ est Hurwitz (*Hypothèse 1*), et en posant que l'estimation $\tilde{x}$ de l'état x vaut $\tilde{x} = x - x^r$ avec $x^r$ le point d'équilibre de cet état, la fonction de Lyapunov V est définie par :

$$V(x) := \tilde{x}^T P \tilde{x} \qquad (6)$$

avec P = $P^T$ > O, P étant la matrice de Lyapunov, la solution de l'équation de Lyapunov (7) est

$$A_i^T P + P A_i + \alpha_i P \leq 0 \qquad i = 1,\ldots,N \qquad (7)$$

avec

$$\alpha(\lambda) = \sum_{i=1}^{N} \lambda_i \alpha_i, \quad \begin{cases} \alpha_i > 0 \\ \alpha_i = 0 \end{cases} \quad \begin{array}{l} \text{si } A(\lambda) \\ \text{est} \\ \text{Hurwitz} \\ \text{Sinon} \end{array}$$

Selon une première proposition (*Proposition 1*), on considère le système commuté (1) et un point d'équilibre $x^r \in X_e$ avec $u = V_e$, $\lambda = \lambda^r$ et $A(\lambda^r)$ Hurwitz : pour $P = P^T > 0$ solution de l'inégalité (7), le point d'équilibre $x^r$ est globalement asymptotiquement stable avec la loi de rétroaction suivante :

$$\sigma^*(x) = \arg \left[ \min_{i \in \mathbb{K}} \left[ \tilde{x}^T P(A_i x + B_i u) \right] \right] \quad (8)$$

On le prouve en utilisant une fonction de Lyapunov $V(x,xr) = (x,xr) = \tilde{x}^T P \tilde{x}$. On représente la dérivée de V, le long des trajectoires $d = A(\lambda)x + B(\lambda)u$, par :

$$\dot{V}(x,x^r;\lambda) = 2\tilde{x}^T P(A(\lambda)x + B(\lambda)u)$$

Par définition de la matrice de Lyapunov $P$, on a :

$$\begin{aligned} \dot{V}(x,x^r;\lambda) = & \; 2\tilde{x}^T P(A(\lambda)\tilde{x} + A(\lambda)x^r + B(\lambda)u) \\ \leq & \; -\alpha(\lambda)\tilde{x}^T P \tilde{x} + 2\tilde{x}^T P(A(\lambda)x^r + B(\lambda)u) \end{aligned}$$

Pour $\lambda = \lambda^r$, le terme $A(\lambda)x^r + B(\lambda)u = 0$ et on a :

$$\begin{aligned} \dot{V}(x,x^r;\lambda^r) = & \; \sum_{i=1}^{N} \lambda_i^r 2\tilde{x}^T P(A_i x + B_i u) \\ \leq & \; -\alpha(\lambda^r)\tilde{x}^T P \tilde{x} \end{aligned} \quad (9)$$

Comme $\alpha \lambda^r = \sum_{i=1}^{N} \lambda_i^r \alpha_i$ ne peut pas être nul en raison de l'*Hypothèse 1,* on peut conclure que le choix de la

$$\begin{aligned} \dot{V}(x,x^r;\sigma^*) = & \; 2\tilde{x}^T P(A_{\sigma^*}x + B_{\sigma^*}u) \\ \leq & \; -\sigma(\lambda^r)\tilde{x}^T P \tilde{x} \\ < & \; 0, if \; \tilde{x} \neq 0 \end{aligned} \quad (10)$$

règle de commutation (8) conduit à :

En pratique, la loi de commande (8) doit être échantillonnée et il a été démontré que cet échantillonnage conduit à une erreur statique, fonction du temps d'échantillonnage $T$. Avec une commutation de fréquence infinie, il est possible de réduire cette erreur statique à zéro, ce qui n'est pas réaliste dans une application en temps réel. De plus, la méthode utilise une fonction de Lyapunov $V$ qui dépend du point d'équilibre $x^r$. Or, pour les convertisseurs de puissance comme celui évoqué précédemment, le point d'équilibre $x^r$ dépend de la charge $R$ et de la tension d'entrée $u$, et s'il y a des variations ou des incertitudes dans ces paramètres, la robustesse de la stabilisation du point d'équilibre doit être analysée. Un autre exemple de modélisation est divulgué dans le document "Robust observer based active damping control for LCL filtered grid connected converters using LMI criterion", 2016 18TH EUROPEAN CONFERENCE ON POWER ELECTRONICS AND APPLICATIONS (EPE'16 ECCE EUROPE), JOINTLY OWNED BY IEEE-PELS AND EPE ASSOCIATION ou le document "Robust constrained stabilization of boost DC-DCconverters through bifurcation analysis", CONTROL ENGINEERING PRACTICE, PERGAMON PRESS, OXFORD, GB.

OBJET DE L'INVENTION

Un but de l'invention est de fournir une loi de commande stable des systèmes commutés qui tienne compte de paramètres constants inconnus. Par exemple, dans le cas de convertisseurs de puissance, l'invention fournit une loi de commande stable même sans connaître la tension d'entrée et/ou la charge de sortie.

EXPOSE DE L'INVENTION

A cet effet, l'invention concerne un procédé de commande d'un circuit électronique commuté reliant une source de tension électrique u à une charge $R$ et formant un système ayant une sortie y et plusieurs modes de fonctionnement $i$ dont au moins certains sont donc activables en suivant une loi de commutation $\sigma$. On prévoit, selon l'invention, les étapes de :

- mesurer des variables d'état x du système ayant des valeurs d'équilibre $x^r$ ;

- introduire dans le système au moins un paramètre p représentatif d'une erreur de mesure d'une inconnue électrique de fonctionnement du circuit ;

- estimer le paramètre à partir d'un observateur d'état;

- en déduire les valeurs d'équilibre du système nécessaires à la convergence de la loi de commande.

Plus précisément, le procédé comprend de préférence les étapes de :

- mesurer des variables d'état x du système ayant des valeurs d'équilibre $x^r$ ;
- associer au moins un paramètre d'erreur p à au moins une inconnue électrique de fonctionnement du système de manière à représenter le système sous la forme

$$\begin{cases} \dot{x} = A_\sigma x + B_\sigma u + G_\sigma p \\ \dot{p} = 0 \end{cases}$$

$A_\sigma$ étant la matrice d'état, $B_\sigma$ la matrice d'entrée et $G_\sigma$ la matrice de paramètre dans le mode $i$ commandé par la loi de commutation $\sigma$ ;
- estimer les valeurs du paramètre $p$ à partir d'un observateur d'état de type

$$\begin{cases} \dot{\hat{z}} = \tilde{A}_\sigma \hat{z} + \tilde{B}_\sigma u + L_\sigma (y - \hat{y}) \\ \hat{y} = \tilde{C}\hat{z} \end{cases}$$

avec $z$ un vecteur d'état tel que $z^T = [x^T, p^T]$, $\tilde{C}$ une matrice d'observation telle que $\tilde{C} = [I0]$, et $L_\sigma$ une matrice de gain calculée par la résolution d'une inégalité matricielle linéaire (LMI de l'anglais « Linear Matrix Inequality ») de telle manière que l'erreur $e$ en fonction du temps entre le vecteur d'état $z$ et son estimée $\hat{z}$ tende exponentiellement vers zéro ;
- en déduire des valeurs d'équilibre estimées $x^r$ des variables d'état $x$ ;
- la loi de commutation ayant la forme suivante $\sigma^*(\hat{x}, \hat{x}^r, \hat{p}) = \arg\left[\min_i \left[w^T P(A_i \hat{x} + B_i u + G_i \hat{p})\right]\right]$ avec $w = (\hat{x} - \hat{x}^r)$ et P la solution de l'équation de Lyapunov.

Ainsi, la loi de commande proposée dépend de l'estimation d'au moins un paramètre ajouté à la modélisation du système pour représenter des pertes et variations de grandeurs qu'on ne peut mesurer ou en tout cas connaître précisément.
D'autres caractéristiques et avantages de l'invention ressortiront à la lecture de la description qui suit d'un mode de mise en œuvre particulier non limitatif de l'invention.

BREVE DESCRIPTION DES DESSINS

Il sera fait référence aux dessins annexés, parmi lesquels :

- la figure 1 est un schéma simplifié d'un circuit d'un convertisseur de type FLYBACK ;
- la figure 2 est une représentation schématique du paramètre $p_1$ ;
- la figure 3 est une représentation schématique du paramètre $p_2$ ;
- la figure 4 représente l'intégration des paramètres $p_1$ et $p_2$ dans ce circuit ;
- la figure 5 représente des courbes illustrant une variation par étapes de R et $V_e$ avec la méthode de commande par commutation et observation de l'invention.

EXPOSE DETAILLE DE L'INVENTION

L'invention est ici décrite en application à un convertisseur continu-continu de type FLYBACK. Néanmoins, il va de soi que l'invention s'applique à tout système commuté.

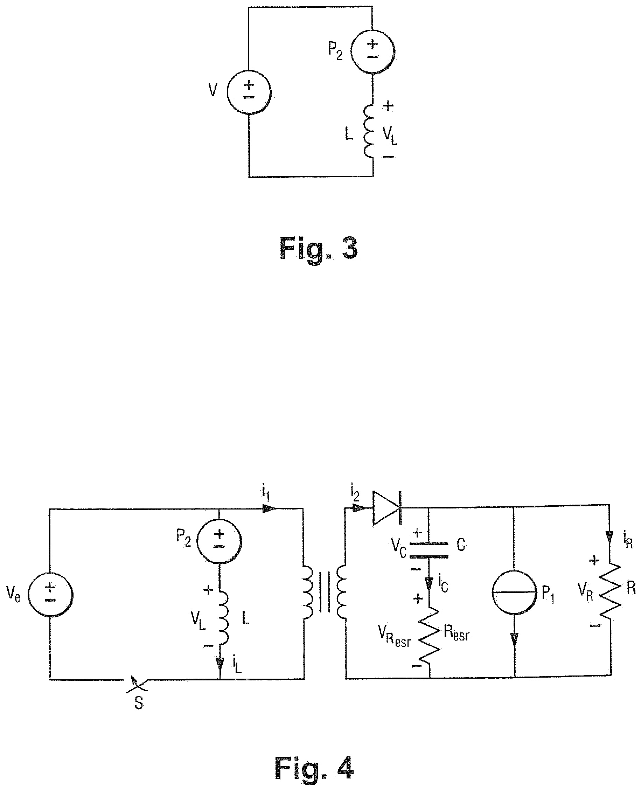

Comme indiqué précédemment, dans les convertisseurs de puissance, il est courant de ne pas disposer d'une mesure de la tension d'entrée ni d'une mesure de la charge de sortie. L'invention prévoit de tenir compte de deux paramètres représentatifs du défaut de mesure de la tension d'entrée et du défaut de mesure de la charge de sortie. Ces paramètres sont ici liés à la résistance R et à la tension $u$, tel qu'illustré sur les figures 2 et 3. Le paramètre de tension $p_2$ permet d'identifier l'erreur sur la tension d'entrée, comme expliqué par les équations (12) (dans lesquelles $x_1$ représente les variables d'état non commandées), et le paramètre de courant $p_1$ permet d'identifier l'erreur sur la charge de sortie, comme expliqué par les équations (11).

$$i = \frac{u}{R} = p_1 + \frac{u}{R} \qquad \hat{R} = \frac{1}{\frac{1}{R^*} + \frac{p_1}{u}} \qquad (11)$$

$$\dot{x_1} = \frac{v_L}{L} = \frac{u^* - p_2}{L} \qquad \hat{u} = u^* - p_2 \qquad (12)$$

Pour faciliter la compréhension, ces deux paramètres, donnés par les équations (11) et (12), sont ajoutés virtuellement au convertisseur, comme montré sur la figure 4.

Une estimation parfaite de ces paramètres donne une information clé sur le point de régime permanent qui n'est pas connu, a priori, en cas de défaut de mesure de R et u. De même, le système affine commuté décrivant le convertisseur de la figure 4 est donné par :

$$\begin{cases} \dot{x} = A_\sigma x + B_\sigma u + G_\sigma p \\ \dot{p} = 0 \end{cases} \qquad (13)$$

$p$ étant un vecteur de paramètres inconnus, $A$ la matrice d'état, $B$ la matrice d'entrée et $G$ la matrice des paramètres.

Pour estimer ce vecteur, on utilise d'abord un vecteur d'état augmenté $z^T = [x^T, p^T]$ pour réécrire le système défini par les équations (13) comme :

$$\begin{cases} \dot{z} = \tilde{A}_\sigma z + \tilde{B}_\sigma u \\ y = \tilde{C} z \end{cases} \qquad (14)$$

avec $\tilde{A}$ est la matrice d'état augmentée et $\tilde{B}$ est la matrice d'entrée augmentée qui sont définies comme

6

$$\bar{A}_1 = \begin{bmatrix} A_1 & G_1 \\ 0 & 0 \end{bmatrix} \quad \bar{B}_1 = \begin{bmatrix} B_1 \\ 0 \end{bmatrix}$$

$$G_1 = \begin{bmatrix} 0 & \frac{-1}{L} \\ \frac{-1}{CK} & 0 \end{bmatrix} \quad G_2 = \begin{bmatrix} \frac{nR_{sr}}{LK} & \frac{-1}{L} \\ \frac{-1}{CK} & 0 \end{bmatrix}, G_3 = \begin{bmatrix} 0 & 0 \\ \frac{-1}{CK} & 0 \end{bmatrix}$$

Sans perte de généralité, on pose $\tilde{C} = [C\ 0]$ la matrice de sortie. Dans notre cas, $C = I$ mais l'approche dont l'invention résulte s'applique également lorsque l'état x n'est pas disponible à la mesure. L'ensemble des points d'équilibre du système défini par la formule (14) est alors :

$$Z_e = \{\ z \in \mathbb{R}^N \ |\ \bar{A}(\lambda)z + \bar{B}(\lambda)u = 0\ \} \tag{15}$$

On considère $z^r \in Z_e$ et $\lambda = \lambda^r$, de sorte que

$$\bar{A}(\lambda^r)z^r + \bar{B}(\lambda^r)V_e = 0 \tag{16}$$

On utilise un observateur d'état augmenté pour récupérer les paramètres inconnus. L'observateur d'ordre entier est défini par :

$$\begin{cases} \dot{\hat{z}} &= \bar{A}_\sigma \hat{z} + \bar{B}_\sigma u + L_\sigma (y - \hat{y}) \\ \hat{y} &= \bar{C}\hat{z} \end{cases} \tag{17}$$

En posant l'erreur e entre le vecteur z et son estimation $\hat{z}$ telle que $e(t) = z(t) - \hat{z}(t)$, sa dynamique est donnée par :

$$\dot{e} = (\bar{A}_\sigma - L_\sigma \bar{C})e \tag{19}$$

Les gains $L_i$ doivent être conçus pour vérifier que $lim_{t \to \infty}[e(t)] = 0$, et que cela peut être réalisé en utilisant le résultat classique suivant.

Selon une deuxième proposition (*Proposition 2*) : s'il existe une matrice définie positive $P_{obs} = P_{obs}^T > 0$, des matrices $R_i$ et des scalaires $\gamma_i > 0$ satisfaisant, pour tout $i \in K$ :

$$\bar{A}_i^T P_{obs} + P_{obs}\bar{A}_1 - \bar{C}^T R_i^T - R_i \bar{C} + \gamma_i P_{obs} < 0 \tag{20}$$

alors les systèmes commutés répondant à l'équation (19) sont, globalement, exponentiellement stables, avec une décroissance au moins égal à $\gamma = \min_{1 \in K} \gamma_i$.

Ceci est prouvé en analysant la fonction de Lyapunov $V(e) = e^T P_{obs} e$ et le changement de variable bien connu $R_i = P_{obs}L_i$.

Si l'équation (20) admet une solution avec $P_{obs} = P_{obs}^T > 0$, cela signifie que $V = e^T P_{obs} e$ est une fonction de Lyapunov et que $lim_{t \to \infty}[e(t)] = 0$ pour toute règle de commutation.

Ceci permet de construire une loi de commande de commutation de stabilisation basée sur une estimation de paramètre et d'état, en modifiant la loi de commutation (8) pour garantir une stabilisation asymptotique globale.

La difficulté principale est associée à la détermination du point de fonctionnement basé sur une estimation $\hat{p}$ de p. Pour expliquer la manière d'y parvenir, les définitions et hypothèses suivantes sont nécessaires.

*Définition 1* : pour $\xi \geq 0$ fixe, on a l'ensemble $\Lambda_{ref}(\xi) = \{\lambda \in \Lambda : A(\lambda + v)$ est Hurwitz pour tout $v \in \beta(0,\xi)\}$.

*Définition 2* : pour $\xi \geq 0$ fixe, on définit l'ensemble des points d'équilibre accessibles comme :

$$X_{ref}(\xi) = \{x^r \in \mathbb{R}^N : x^r = -A(\lambda)^{-1} \begin{bmatrix} B(\lambda) & G(\lambda) \end{bmatrix} \begin{bmatrix} u \\ p \end{bmatrix},$$
$$(p,\lambda) \in \mathbb{R}^{n_p} \times \Lambda_{ref}(\xi)\}$$

On pose $x_2$ comme la partie commandée des variables d'état et $x_1$ les variables d'état restantes, tel que

$x^T = (x_1^T, x_2^T).$ Sans perte de généralité, on suppose que $x_1 = C_{x1}x$ et $x_2 = C_{x2}x$. On considère la fonction $\varphi$ en $C^\infty$ :

$$\varphi(\lambda, x_1, x_2, u, p) = A(\lambda)x + B(\lambda)u + G(\lambda)p \quad (21)$$

Pour $\lambda \in \Lambda_{ref}(\xi)$, signifiant que $A(\lambda)$ est Hurwitz et, par suite, inversible, il existe pour tout $u$ et $p$ fixes, un $x$ *unique,* tel que

$$\varphi(\lambda, x_1, x_2, u, p) = 0$$

*Hypothèse 2* : pour tout $x_2^r \in X_{ref}(\xi)|_{x_2, u, p},$ il existe une unique fonction de classe $C^1$ $\varnothing = (\varnothing_1, \varnothing_2)$ tel que

$$x_1^r = \phi_1(x_2^r, u, p) \in X_{ref}(\xi)|_{x_1} \qquad (22)$$

$$\lambda^r = \phi_2(x_2^r, u, p) \in \Lambda_{ref}(\xi) \qquad (23)$$

qui vérifie la relation suivante :

$$\psi(\lambda, x_1, x_2, u, p) = \psi(\lambda^r, x_1^r, x_2^r, u, p)$$
$$= 0$$

De plus, on suppose qu'il existe une constante $\eta(x_2^r, u, \xi) > 0$ telle que

$$\left\| \frac{\partial \phi_1(x_2^r, u, \cdot)}{\partial p} \right\|_\infty \leq \eta(x_2^r, u, \xi) \qquad (24)$$

La paramétrisation opérée par les équations (22) et (23) joue un rôle important dans l'approche proposée, car elle permet d'estimer le point de référence basé sur une estimation $\hat{p}$ des paramètres $p$ et une référence (ou valeur d'équilibre) $x_2^r$ pour la partie commandée $x_2$ des variables d'état. Cela conduit à

$$\hat{x}_1^r = \phi_1(x_2^r, u, \hat{p}) \qquad (25)$$

$$\hat{\lambda}^r = \phi_2(x_2^r, u, \hat{p}) \qquad (26)$$

A partir de là, on considère :

$$\hat{x}^r = \begin{bmatrix} \hat{x}_1^r \\ x_2^r \end{bmatrix}.$$

La dynamique de $\hat{x}_1^r$, pour $x_2^r$ et $u$ fixes, est :

$$\dot{\hat{x}}_1^r = \frac{\partial \phi_1}{\partial p} \dot{p} \qquad (27)$$

$$= \frac{\partial \phi_1}{\partial p} (\dot{\hat{p}} - \dot{p}) \qquad (28)$$

$$\dot{x}_2^r = 0 \qquad (29)$$

En supposant que $\dot{p} = 0$ et en remplaçant $\dot{\hat{p}}$ par son expression (18), on obtient :

$$\dot{\hat{x}}_1^r = \frac{\partial \phi_1}{\partial p} L(\hat{\lambda}^r) \tilde{C} e \qquad (30)$$

$$\dot{x}_2^r = 0 \qquad (31)$$

Ceci conduit au théorème suivant.
*Théorème 1* : en considérant le système affine commuté avec des paramètres inconnus tel que défini en (13), en posant $x^{rT} = (x_1^{rT}, x_2^{rT})$ avec $x_1^r = \emptyset_1(x_2^r, u, p)$ et en supposant que la *Proposition 1* et la *Proposition 2* soient satisfaites, on obtient, selon l'*Hypothèse 1* et l'*Hypothèses 2* et pour tout $x_2^r \in X_{ref}(\xi)|_{x2}$ avec $\xi > 0$, la loi de rétroaction définie par :

$$\sigma^*(\hat{x}, \hat{x}^r, \hat{p}) = \arg\left[\min_i \left[w^T P(A_i \hat{x} + B_i u + G_i \hat{p})\right]\right] \qquad (32)$$

avec $w = (\hat{x} - \hat{x}^r)$.
Cette loi de rétroaction garantit une stabilité asymptotique globale du point d'équilibre $x^r$ comme cela peut être prouvé ci-dessous.
On tire de la *Proposition 2* le fait que l'erreur d'observation converge vers zéro pour toute règle de commutation et, de la *Proposition 1,* la matrice de Lyapunov $P$ et les scalaires $\alpha_i$. Pour $\hat{\lambda}^e \in \Lambda_{ref}(\xi)$, l'équation (7) donne :

$$2w^T P A(\hat{\lambda}^r) w + \alpha(\hat{\lambda}^r) w^T P w \le 0 \qquad (33)$$

avec

$$\alpha\left(\hat{\lambda}^r\right) = \Sigma_{i=1}^N \hat{\lambda}_i^r \alpha_i .$$

Avec $A(\hat{\lambda^r})\hat{x^r} + B(\hat{\lambda^r})u + G(\hat{\lambda^r})\hat{p} = 0$ et $\hat{\lambda^r}$ défini dans les équations (25) et (26), il vient :

$$2w^T P(A(\hat{\lambda^r})\hat{x} + B(\hat{\lambda^r})u + G(\hat{\lambda^r})\hat{p})$$
$$\leq -\alpha(\hat{\lambda^r})w^T P w$$

$$\sum_{i=1}^N \hat{\lambda}_i^r 2w^T P(A_i\hat{x} + B_i u + G_i\hat{p})$$
$$\leq -\alpha(\hat{\lambda^r})w^T P w$$

Comme

$$\alpha(\hat{\lambda^r}) = \Sigma_{i=1}^N \hat{\lambda}_i^r \alpha_i$$

ne peut pas être nulle selon l'*Hypothèse 1,* nous pouvons conclure que la loi de commande (32) conduit à :

$$2w^T P(A_{\sigma^*}\hat{x} + B_{\sigma^*}u + G_{\sigma^*}\hat{p}) \leq -\alpha(\hat{\lambda^r})w^T P w \qquad (34)$$

$$< 0, \ \text{if} w \neq 0 \qquad (35)$$

En prenant la fonction de Lyapunov V définie dans l'équation (6) et en utilisant $(\hat{x}, \hat{x^r}, \lambda)$, au lieu de $x, x^r$, on obtient :

$$\dot{V}(\hat{x}, \hat{x^r}, \lambda) = 2w^T P(A(\lambda)\hat{x} + B(\lambda)u + G(\lambda)\hat{p})$$
$$+ (\overline{L}(\lambda) - \frac{\partial\phi_1}{\partial p}\underline{L}(\lambda))\tilde{C}e)$$

Si l'on ajoute de chaque côté de l'inégalité (34) le terme suivant

$$2w^T P(\overline{L}_{\sigma^*} - \frac{\partial\phi_1}{\partial p}\underline{L}_{\sigma^*})\tilde{C}e$$

on obtient :

$$\dot{V}(\hat{x}, \hat{x^r}; \sigma^*) \leq -\alpha(\hat{\lambda^r})w^T P w + 2w^T P(\overline{L}_{\sigma^*} - \frac{\partial\phi_1}{\partial p}\underline{L}_{\sigma^*})\tilde{C}e \qquad (36)$$

Comme e converge exponentiellement vers 0 pour toute règle de commutation, et donc, en particulier, pour les règles de commutation découlant de la loi de commande (32), avec $\overline{y} = min_i\gamma_i$, il existe K > 0,

$$\|e(t)\| \leq K e^{-\gamma t}\|e_0\|$$

D'où :

$$\dot{V}(\hat{x}, \hat{x}^r, \sigma^*) \quad \leq -\alpha(\hat{\lambda}^r) w^T P w + 2\beta_{max} \|w\|$$
$$\times (\|\overline{L}_{\sigma^*}\| + \|\tfrac{\partial \phi_1(x_2^r, u, \cdot)}{\partial p}\|_\infty \|\underline{L}_{\sigma^*}\|) \qquad (37)$$
$$\times \|\tilde{C}\| K e^{-\gamma t} \|e_0\|$$

avec $\beta_{max}$ la valeur propre maximale de P.

Une condition suffisante pour garantir

$$\dot{V}(\hat{x}, \hat{x}^r; \sigma^*) \leq -\frac{\alpha(\hat{\lambda}^r)}{2} w^T P w < 0$$

est

$$\|w\| > \max_i 4 \frac{\beta_{max}}{\alpha_{min}\beta_{min}} (\|\overline{L}_i\| + \|\tfrac{\partial \phi_1(x_2^r, u, \cdot)}{\partial p}\|_\infty \|\underline{L}_i\|)$$
$$\times \|\tilde{C}\| K e^{-\gamma t} \|e_0\|$$

où $\beta_{min}$ est la valeur propre minimale de P et

$$\alpha_{min} = \min_{\lambda \in \Lambda_{ref}(\xi)} \alpha(\lambda)$$

Il à noter que $\alpha_{min} > 0$ pour $\xi > 0$ selon l'Hypothèse 1 et par définition de $\Lambda_{ref}(\xi)$.

Comme il existe $\eta(x_2^r, u, \xi) > 0$, tel que

$$\left\|\frac{\partial \phi_1(x_2^r, u, \cdot)}{\partial p}\right\|_\infty \leq \eta(x_2^r, u, \xi),$$

on peut conclure qu'il existe une constante $M(x_2^r, u, \xi) > 0$, telle que si

$$\|w\| > M(x_2^r, u, \xi) e^{-\gamma t} \|e_0\|$$

alors,

$$\dot{V}(\hat{x}, \hat{x}^r; \sigma^*) \leq -\frac{\alpha(\hat{\lambda}^r)}{2} w^T P w < 0$$

Comme il est possible d'affirmer que :

$$\forall e_0, \forall \epsilon, \exists t_2, \text{ tel que } M e^{-\gamma t} \|e_0\| < \epsilon, \forall t > t_2,$$

on a nécessairement $\dot{V}(\hat{x}, \hat{x}^r; \sigma^*) \leq -\frac{\alpha_{min}}{2} w^T P w < 0,$ pour tout w, tel que $\|w\| > \epsilon$. Cela signifie que pour tout w(0), il existe $t_3$, tel que :

$$\|w(t)\| \leq \in$$

pour tout $t > t_3$.

On peut alors conclure que $w$ converge asymptotiquement vers 0. Comme e converge également vers zéro, nous avons :

$$\hat{x} \rightarrow x \rightarrow \hat{x}^r = \begin{bmatrix} \hat{x}_1^r \\ x_2^r \end{bmatrix}$$

avec $\hat{x}_1^r = \emptyset_1(x_2^r, r, p)$, puisque $\hat{p} \rightarrow p$.

Les conditions dans l'*Hypothèse* 2 peuvent être relaxées comme suit.

On formule ensuite une troisième hypothèse (*Hypothèse 3*) : on suppose que l'application $\emptyset = (\emptyset_1, \emptyset_2)$ dans l'*Hypothèse 2* n'est plus valable pour tout $p$, mais seulement pour tout $p$ dans un domaine convexe fermé représenté $P(x_2, u, \xi)$ fonction de $u, x_u$ et $\xi$. On suppose également que la valeur nominale du paramètre $p$ est incluse dans

$$P(x_2^r, u, \xi)$$

et $\lambda = x_2(x_2^r, u, p) \in \Lambda_{ref}(\xi)$.

Selon une troisième proposition (*Proposition 3*) : selon l'*Hypothèse* 3, le *Théorème* 1 reste vrai, si le point de fonctionnement $(\hat{x}_1^r, \hat{\lambda}^r)$ est tel que

$$\hat{x}_1^r = \phi_1(x_2^r, u, \Pi\hat{p}) \qquad (38)$$

$$\hat{\lambda}^r = \phi_2(x_2^r, u, \Pi\hat{p}) \qquad (39)$$

où $\Pi\hat{p}$ est la projection orthogonale de $\hat{p}$ sur $P(X_2^r, u, \xi)$.

Ceci peut être prouvé de la façon suivante. Comme $P(x_2^r, u, \xi)$ est fermé et convexe, la projection orthogonale $\Pi\hat{p}$ de $\hat{p}$ sur $P(x_2^r, u, \xi)$ est continue. On considère la fonction $\emptyset$ et on utilise la projection $\Pi$, tel que $\hat{p} \rightarrow \emptyset_i(x_2^r, u, \Pi\hat{p})$, $i = 1, 2$ pour $x_2^r$ et $u$ fixes. Comme $\hat{\lambda}^r = \emptyset_2(x_2^r u, \Pi\hat{p}) \in \Lambda_{ref}(\xi)$, on constate que

$$\begin{aligned} \hat{x}_1^r &= \phi_1(x_2^r, u, \Pi\hat{p}) \\ &= -C_{x_1}A(\hat{\lambda}^r)^{-1}[B(\hat{\lambda}^r)\ G(\hat{\lambda}^r)]\begin{bmatrix} u \\ \Pi\hat{p} \end{bmatrix} \qquad (40) \end{aligned}$$

qui est bien défini comme $A(\hat{\lambda}^r)$, est inversible.

La projection $\Pi$ permet de calculer un point de référence $(\hat{x}_1^r, x_2^r)$ pour tout $t$. Bien entendu, le point de fonctionnement $\hat{x}^r, (\hat{x}_1^r, x_2^r)$ calculé de cette manière avec une projection de $p$ n'est pas un point d'équilibre du système lorsque $\hat{p} \notin P(x_2^r, u, \xi)$.

Comme $\hat{p} \in P(x_2^r, u, \xi)$, la convergence vers zéro de l'erreur *e* pour toute règle de commutation et la continuité de $\emptyset$ garantissent qu'il existe un temps $t_1(e_o)$, tel que $\hat{\lambda}^r = \emptyset_2(x_2^r, u, \hat{p}) \in \Lambda_{ref}(\xi)$ et $\hat{p} \in P(x_2^r, u, \xi)$ pour tout t > $t_1$, dès que P est suffisamment proche de p. Pour tout *t* > $t_1$, on arrive à la preuve en suivant des étapes similaires que celles mises en œuvre pour prouver le *Théorème 1*.

Ainsi, pour piloter un convertisseur de type FLYBACK tel que celui décrit, il suffit d'associer au convertisseur une unité de commande de l'interrupteur qui soit programmée pour mettre en œuvre la loi de commande du *Théorème 1*.

Un exemple numérique va maintenant être décrit.

On choisit un convertisseur de type FLYBACK décrit par l'équation (1) qui dépend de six paramètres ayant les valeurs nominales suivantes :

$u = 28V$, $R = 75\Omega$, $L = 200\mu H$, $C = 2.6\mu F$, $R_{esr} = 0.02\Omega$ et $n = 2$.

On pose le point d'équilibre cible $x_2^r = 15V$. On suppose que le convertisseur travaille avec lesdites valeurs nominales et, en ayant comme objectif principal la robustesse, on suppose également que *x* et $x_2$ sont mesurés. On suppose également que la charge *R* et la tension d'entrée $V_e$ peuvent changer et que ces paramètres ne sont pas mesurés.

Par hypothèse, on considère une fonction constante par morceaux avec des variations comprises entre $15\Omega$ et $150\Omega$ pour la charge, et entre 44V et 28V pour la tension d'entrée.

On vérifie que ce système satisfait à l'*Hypothèse 3*. Pour une valeur $x_2^r$ donnée, et en calculant $\hat{p}$ à partir de (17), on obtient $\lambda^r$:

$$\begin{cases} \lambda_1^r = \dfrac{(R_{esr}+R_o)(p_2+nx_2^r)}{(R_{esr}+R_o)V_e+nR_ox_2^r-nR_{esr}R_op_1} \\ \lambda_2^r = 1 - \lambda_1^r \end{cases} \quad (41)$$

Pour une valeur $\xi > 0$ donnée, l'ensemble $\Lambda_{ref}(\xi)$ est donné par

$$\begin{cases} \lambda_1 \in [0 \ 1-\xi[ \\ \lambda_2 = 1 - \lambda_1 \end{cases}$$

puisque seul $A_1$ n'est pas Hurwitz. Il est alors simple de vérifier à partir des équations (41) que si $P(x_2^r, u, \xi)$ est défini par :

$$-p_{1max} \leq p_1 < p_{1max} < p_{1lim}$$

$$-nx_2^r \leq p_2 \leq a(\xi)p_1 + b(\xi)$$

avec

$$a(\xi) = -(1-\xi)\frac{nR_{esr}R}{R_{esr}+R}, \ b(\xi) = (1-\xi)V_e - nR_{esr}x_2^r$$

et $p_{1lim} = \dfrac{(R_{esr}+R)V_e+nRx_2^r}{nR_{esr}R}$, alors $\lambda_1^r \in \Lambda_{ref}(\xi)$ et donc $x_1^r$ est bien défini pour l'ensemble *P*. De plus, comme l'ensemble *P* est compact, l'inégalité (24) est satisfaite, comme l'est, par suite, l'*Hypothèse* 3 pour l'application considérée. En pratique, $p_{1_{max}} = 10^3$, valeur très éloignée des valeurs physiques admissibles pour $p$.

On résout les conditions LMI (7) pour obtenir la matrice $P$ avec $\alpha_1 = 0$, $\alpha_2 = 35$ et = 0,1 :

$$P = \begin{pmatrix} 74291 & 36 \\ 36 & 993 \end{pmatrix} \qquad (43)$$

On résout également les conditions LMI (20) pour obtenir les gains $L_i$ pour l'observateur avec $\gamma_1 = \gamma_2 = 3,3\ x\ 10^4$. Dans cette application, un gain de l'observateur courant est obtenu pour chaque mode :

$$L_i = \begin{pmatrix} 362 & 19 \\ 19 & 1569 \\ 243 & -3153 \\ -3153 & -243 \end{pmatrix}, \qquad i \in \mathbb{K} \qquad (44)$$

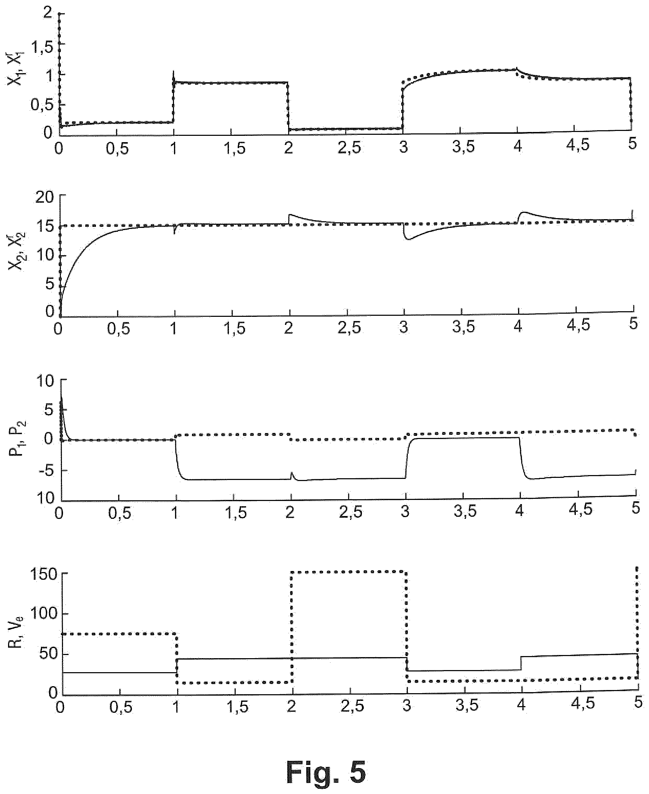

En appliquant la commande robuste et adaptative du *Théorème 1,* on obtient les résultats représentés sur la figure 5. Pour voir le comportement du système en boucle fermée, dans le cas où tous les paramètres sont parfaitement connus, le scénario de la simulation débute avec les valeurs nominales $x_2$. Les variations de R et U sont introduites après 1 *ms.* La figure 5 montre une variation par étapes de R et $V_e$ avec la méthode de commande par commutation et observation. Les courbes 1 et 2 montrent respectivement $x_1, \hat{x}_1^r$ et $x_2, x_2^r$ tandis que la courbe 3 montre les paramètres d'estimation p₁ et p₂ et la courbe 4 montrent les variations de U et R. Les temps sont indiqués en ms.

Il apparaît sur ces courbes que le paramètre p converge vers une nouvelle valeur, chaque fois que $R$ ou $V_e$ change, et que la sortie commandée, $x_2$, possède une robustesse vis-à-vis des variations de $R$ et $V_e$. La loi de commande rejette nettement la perturbation sur x2 et le courant x1 est bien adapté aux variations.

On note ici que le procédé de commande selon l'invention ne se base pas sur une approximation linéaire du système. Le procédé de commande est mis en œuvre directement sur le modèle du système commuté en prenant en compte les non-linéarités, ce qui permet de garantir la stabilité asymptotique globale du correcteur.

De plus, la démonstration de la stabilité est faite avec l'observateur dans la boucle de commande, ce qui ne correspond pas à la pratique générale de l'art antérieur.

Généralement, en outre, la méthode de commande est développée sous l'hypothèse que l'observateur a convergé. Or, on prouve ici que l'observateur n'a pas besoin d'avoir déjà convergé pour garantir la stabilité asymptotique de l'ensemble.

Le procédé de commande selon l'invention est ainsi particulièrement avantageux.

Comme on l'a vu plus haut, le procédé de commande permet d'obtenir une loi de commande stable même sans connaître précisément tous les paramètres de fonctionnement du circuit électronique commuté.

Ici, on ne mesure pas la tension d'entrée et la charge de sortie : les observateurs utilisés permettent de tenir compte de ces paramètres.

On obtient donc une commande auto-adaptative vis-à-vis de variations de paramètres de fonctionnement du circuit électronique commuté, sans qu'il ne soit nécessaire de mesurer lesdits paramètres de fonctionnement. On simplifie et on réduit le coût du circuit électronique commuté en supprimant les difficultés liées à l'obtention de mesures précises des paramètres de fonctionnement.

On note que la loi de commande est stable dans un domaine de fonctionnement plus large que le domaine de stabilité obtenu dans les lois de commande de l'art antérieur (hors domaine linéaire).

De plus, cette stabilité, obtenue grâce à la mise en œuvre du procédé de commande selon l'invention, peut être démontrée. La possibilité de démontrer la stabilité est un atout très important dans les applications qui requièrent des activités de certification, et notamment dans les applications aéronautiques. Sans une telle démonstration de la stabilité, et même si le circuit semble fonctionner parfaitement, il est en effet impossible de garantir la stabilité sur tout le domaine de fonctionnement, et donc il est impossible de certifier et d'autoriser « à voler » un équipement mettant en œuvre un tel circuit.

Bien entendu, l'invention n'est pas limitée aux modes de réalisation décrit mais englobe toute variante entrant dans le champ de l'invention telle que définie par les revendications.

**Revendications**

1.  Procédé de commande d'un circuit électronique commuté reliant une source de tension électrique $u$ à une charge $R$ et formant un système ayant une sortie y et plusieurs modes de fonctionnement $i$ dont au moins certains sont donc activables en suivant une loi de commutation $\sigma$, **caractérisé en ce que** le procédé comprend les étapes de :

    - mesurer des variables d'état x du système ayant des valeurs d'équilibre $x^r$ ;
    - associer au moins un paramètre d'erreur p à au moins une inconnue électrique de fonctionnement du système de manière à représenter le système sous la forme

    $$\begin{cases} \dot{x} = A_\sigma x + B_\sigma u + G_\sigma p \\ \dot{p} = 0 \end{cases}$$

    $A_\sigma$ étant la matrice d'état, $B_\sigma$ la matrice d'entrée et $G_\sigma$ la matrice de paramètre dans le mode i commandé par la loi de commutation $\sigma$ ;

    - estimer les valeurs du paramètre $p$ à partir d'un observateur d'état de type $\begin{cases} \dot{\hat{z}} = \tilde{A}_\sigma \hat{z} + \tilde{B}_\sigma u + L_\sigma(y - \hat{y}) \\ \hat{y} = \tilde{C}\hat{z} \end{cases}$

    avec $z$ un vecteur d'état tel que $z^T = [x^T, p^T]$, $\tilde{C}$ une matrice d'observation telle que $\tilde{C} = [I\ 0]$, et $L_\sigma$ une matrice de gain calculée par résolution d'une inégalité matricielle linéaire (LMI) de telle manière que l'erreur e en fonction du temps entre le vecteur d'état $z$ et son estimée $\hat{z}$ tende asymptotiquement vers zéro ;
    - en déduire des valeurs d'équilibre estimées $\hat{x}^r$ des variables d'état $x$ ;
    - la loi de commutation ayant la forme suivante

    $$\sigma^*(\hat{x}, \hat{x}^r, \hat{p}) = \arg\left[ \min_i \left[ w^T P(A_i \hat{x} + B_i u + G_i \hat{p}) \right] \right]$$

    avec $w = (\hat{x} - \hat{x}^r)$ et P la solution de l'équation de Lyapunov.

2.  Procédé selon la revendication 1, dans lequel le circuit électronique est un convertisseur comprenant un circuit primaire et un circuit secondaire ; le circuit primaire comprenant une source de tension reliée en série à l'enroulement primaire d'un transformateur et à un interrupteur, une inductance $L$ étant montée en parallèle de l'enroulement primaire et étant soumise à une tension $v_L$ ; le circuit secondaire comprenant un enroulement secondaire du transformateur relié par une diode à une charge de résistance $R$ ; le procédé comprenant l'étape de définir un paramètre de courant $p_1$ pour représenter l'erreur sur la charge de sortie telle que $i = p_1 + \dfrac{v}{R}$ et un paramètre de tension $p_2$ pour représenter une erreur sur la tension d'entrée telle que $\dot{x}_1 = \dfrac{v_L}{L} = \dfrac{u - p_2}{L}$ où $x_1$ représente les variables d'état non commandées.

**Patentansprüche**

1.  Verfahren zur Steuerung einer geschalteten elektronischen Schaltung, die eine elektrische Spannungsquelle $u$ mit einer Last $R$ verbindet und ein System bildet, das einen Ausgang y und mehrere Betriebsmodi $i$ hat, von denen zumindest einige folglich gemäß einem Schaltungsgesetz $\sigma$ aktivierbar sind, **dadurch gekennzeichnet, dass** das Verfahren die Schritte umfasst:

    - Messen von Zustandsvariablen x des Systems, die Gleichgewichtswerte $x^r$ haben;
    - Verknüpfen mindestens eines Fehlerparameters p mit mindestens einer elektrischen Betriebsunbekannten des Systems, sodass das System in der Form dargestellt wird:

$$\begin{cases} \dot{x} = A_\sigma x + B_\sigma u + G_\sigma p \\ \dot{p} = 0 \end{cases}$$

wobei $A_\sigma$ die Zustandsmatrix, $B_\sigma$ die Eingangsmatrix und $G_\sigma$ die Parametermatrix in dem Modus $i$ ist, der von dem Schaltungsgesetz $\sigma$ gesteuert wird;

- Schätzen der Werte des Parameters $p$ anhand eines Zustandsbeobachters der Art

$$\begin{cases} \dot{\hat{z}} = \tilde{A}_\sigma \hat{z} + \tilde{B}_\sigma u + L_\sigma(y - \hat{y}) \\ \hat{y} = \tilde{C}\hat{z} \end{cases}$$

wobei zein Zustandsvektor ist, sodass $z^T = [x^T, p^T]$, $\tilde{C}$ eine Beobachtungsmatrix ist, sodass $\tilde{C} = [I0]$ und $L_\sigma$ eine Verstärkungsmatrix ist, die durch Auflösung einer linearen Matrixungleichung (LMI) derart berechnet wird, dass der Fehler $e$ in Abhängigkeit der Zeit zwischen dem Zustandsvektor $z$ und seinem Schätzwert $\hat{z}$ asymptotisch nach Null tendiert;

- daraus Ableiten von geschätzten Gleichgewichtswerten $\hat{x}^r$ der Zustandsvariablen $x$;
- wobei das Schaltungsgesetz die folgende Form hat

$$\sigma^*(\hat{x}, \hat{x}^r, \hat{p}) = \arg\left[\min_i \left[w^T P(A_i \hat{x} + B_i u + G_i \hat{p})\right]\right]$$

wobei $w = (\hat{x} - \hat{x}^r)$ und P die Lösung der Lyapunov-Gleichung ist.

2. Verfahren nach Anspruch 1, bei dem die elektronische Schaltung ein Wandler ist, der eine primäre Schaltung und eine sekundäre Schaltung umfasst; wobei die primäre Schaltung eine Spannungsquelle umfasst, die mit einer primären Wicklung eines Transformators und mit einem Unterbrecher in Reihe geschaltet ist, wobei eine Induktivität L parallel zur primären Wicklung geschaltet und einer Spannung $v_L$ ausgesetzt ist; wobei die sekundäre Schaltung eine sekundäre Wicklung des Transformators umfasst, der über eine Diode mit einer Widerstandslast R verbunden ist; wobei das Verfahren den Schritt des Definierens eines Stromparameters $p_1$ umfasst, um den Fehler an der Ausgangslast darzustellen, sodass $i =$

$$p_1 + \frac{v}{R},$$ sowie eines Spannungsparameters $p_2$, um einen Fehler an der Eingangsspannung darzustellen, sodass

$$\dot{x}_1 = \frac{v_L}{L} = \frac{u - p_2}{L},$$ wobei $x_1$ die nicht gesteuerten Zustandsvariablen darstellt.

**Claims**

1. A method for controlling a switched electronic circuit connecting a voltage source $u$ to a load $R$ and forming a system having an output y and a plurality of operating modes $i$, at least some of which can therefore be activated by following a switching law $\sigma$, **characterized in that** the method comprises the steps of:

- measuring state variables x of the system having equilibrium values $x^r$;
- associating at least one error parameter p with at least one electrical operating unknown of the system so as to represent the system in the form

$$\begin{cases} \dot{x} = A_\sigma x + B_\sigma u + G_\sigma p \\ \dot{p} = 0 \end{cases}$$

$A_\sigma$ being the state matrix, $B_\sigma$ the input matrix and $G_\sigma$ the parameter matrix in mode $i$ controlled by the switching law $\sigma$;

- estimating the values of the parameter $p$ on the basis of a state observer of type

$$\begin{cases} \dot{\hat{z}} = \tilde{A}_\sigma \hat{z} + \tilde{B}_\sigma u + L_\sigma(y - \hat{y}) \\ \hat{y} = \tilde{C}\hat{z} \end{cases}$$

where $z$ is a state vector such that $z^T = [x^T, p^T]$, $\tilde{C}$ is an observation matrix such that $\tilde{C} = [I0]$, and $L_\sigma$ is a gain matrix calculated by solving a linear matrix inequality (LMI) such that the error e with time between the state vector $z$ and its estimate $\hat{z}$ tends asymptotically toward zero;

- deducing therefrom estimated equilibrium values $\hat{x}^r$ of the state variables $x$;

- the switching law taking the following form $$\sigma^*(\hat{x}, \hat{x}^r, \hat{p}) = \arg\left[\min_i \left[w^T P(A_i\hat{x} + B_i u + G_i\hat{p})\right]\right]$$ where $w$ = $(\hat{x} - \hat{x}^r)$ and P is the solution to the Lyapunov equation.

2. The method as claimed in claim 1, wherein the electronic circuit is a converter comprising a primary circuit and a secondary circuit, the primary circuit comprising a voltage source that is connected in series with the primary winding of a transformer and with a switch, an inductor $L$ being connected in parallel with the primary winding and being under a voltage $v_L$, the secondary circuit comprising a secondary winding of the transformer that is connected by a diode to a resistive load R, the method comprising the step of defining a current parameter $p_1$ to represent the error in the output load such that $$i = p_1 + \frac{v}{R}$$ and a voltage parameter $p_2$ to represent an error in the input voltage such that $$\dot{x}_1 = \frac{v_L}{L} = \frac{u - p_2}{L}$$ where $x_1$ represents the uncontrolled state variables.

Fig. 1

Fig. 2

Fig. 3

Fig. 4

**Fig. 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Robust observer based active damping control for LCL filtered grid connected converters using LMI criterion. 2016 18TH EUROPEAN CONFERENCE ON POWER ELECTRONICS AND APPLICATIONS (EPE'16 ECCE EUROPE). IEEE-PELS AND EPE ASSOCIATION, 2016

- Robust constrained stabilization of boost DC-DCconverters through bifurcation analysis. CONTROL ENGINEERING PRACTICE. PERGAMON PRESS